# EUROPÄISCHE PATENTSCHRIFT

(11) **EP 0 563 533 B1**
(45) Veröffentlichungstag und Bekanntmachung des Hinweises auf die Patenterteilung: **13.01.1999**
(21) Anmeldenummer: 93101663.8
(22) Anmeldetag: 03.02.1993
(51) Int. Cl.: B32B 29/08, B32B 29/06, B65D 65/40, B65D 81/18

(54) **Wellpappe**
Corrugated board
Carton ondulé

(30) Priorität: 30.03.1992 DE 9204293 U; 20.05.1992 DE 9206863 U; 14.10.1992 DE 4234689
(43) Veröffentlichungstag der Anmeldung: 06.10.1993
(73) Patentinhaber: HANS KOLB WELLPAPPE GmbH & Co., D-87685 Memmingen (DE)
(72) Erfinder: Laves, Wolf-Henning, W-8944 Grönenbach (DE)
(74) Vertreter: Grünecker, Kinkeldey, Stockmair & Schwanhäusser Anwaltssozietät

(56) Entgegenhaltungen:
- EP-A- 0 216 311
- EP-A- 0 228 710
- DE-A- 2 947 262
- DE-A- 3 214 940
- GB-A- 2 023 495
- US-A- 4 685 563
- US-A- 4 746 574

## Beschreibung

Die Erfindung betrifft Wellpappe gemäß dem Oberbegriff von Anspruch 1 sowie einen Faltbehälter und Bogenware gemäß den nebengeordneten Ansprüchen 16 und 17.

Im Aufbau einer aus US-A-4685563 bekannten Wellpappe ist eine durchgehende abschirmende Schicht innen im Aufbau vorgesehen. Die Außenflächen der Wellpappe sind unbehandelt bzw. frei.

Im Aufbau einer aus US-A-4482048 bekannten Wellpappe ist ebenfalls innen wenigstens eine abschirmende, vollflächige Schicht vorgesehen. Die Außenoberflächen der Wellpappe sind unbehandelt.

Bei einem aus DE-B1-2947262 bekannten Faltbehälter aus Wellpappe ist zumindest die dem Innenraum zugewandte freie Seite der Decklage mit einer wässrigen Emulsion mit darin dispergierten Kohlenstoffpartikeln bedruckt.

Aus DE-A-3214940 ist ein Folienwerkstoff bekannt, der auf einer oder auf beiden Seiten mit einem Netzwerk oder Gitterwerk von sich kreuzenden Linien aus leitfähiger Druckfarbe bedruckt ist. Im Falle von Kraftpapier als Folienwerkstoff für die Außendecklage einer Wellpappe ist die Außenseite mit dem Netzwerk bedruckt.

Aus EP-B1-0216311 ist es bekannt, Wellpappe für einen Faltbehälter an der dem Innenraum zugewandten freien Seite mit einer kohlenstoffhaltigen Beschichtung zu versehen und in die Wellpappe eine Aluminiumfolie einzukaschieren, die zumindest punktweise mit der Beschichtung verbunden wird.

Ein aus US-A-4 746 574 bekanntes, antistatisches Bogenmaterial besteht aus einer Substratschicht einer Kunststoff-Folie, einer Ruß enthaltenden Schicht auf einer Oberfläche der Substratschicht und einer die Schicht vollflächig abdeckenden transparenten Kunststoffschicht. Die elektrisch leitenden vollflächige oder gitterartige Schicht besitzt mikroskopisch kleine Vorsprünge, die in die Oberflächenschicht eindringen. Durch die Zusammenwirkung zwischen der kohlenstoffhaltigen Schicht und der Oberflächenschicht wird der an sich hohe Oberflächenwiderstand der Oberflächenschicht erheblich verringert.

Der Erfindung liegt die Aufgabe zugrunde, eine Wellpappe der eingangs genannten Art sowie einen Faltbehälter oder Bogenware zu schaffen, bei denen die abschirmende Schicht die farblich und drucktechnisch freie Gestaltbarkeit der Wellpappe ermöglicht, die einfach zu entsorgen oder recyceln sind, und bei denen ein wirksamer Schutz gegen harte Entladungen gegeben ist.

Die gestellte Aufgabe wird mit den im kennzeichnenden Teil des Patentanspruchs 1 sowie mit den in den kennzeichnenden Teilen der nebengeordneten Ansprüche 17 und 18 enthaltenen Merkmalen gelöst.

Die im Inneren der Wellpappe vorgesehene niederohmige Schicht erbringt eine wirksame Abschirmung, wobei die Schicht von außen nicht beschädigt werden kann und das natürliche Aussehen der Wellpappe nicht beeinträchtigt. Die erforderliche Abschirmwirkung läßt sich bereits mit nur einer einzigen Schicht erreichen, dadurch ist der Einsatz von Kohlenstoff und/oder Graphit reduziert. Die Wellpappe ist günstig zu entsorgen und leicht zu recyceln. Mehrere Schichten sind aus Sicherheitsgründen vorteilhaft. Aufgrund des Zusammenspiels zwischen der Schicht und dem ableitenden Lack wird eine bis zum Faktor 5 gegenüber herkömmlichen abschirmenden Wellpappen bessere Abschirmung erreicht, u. a., weil zwischen dem ableitendem Lack und der niederohmigen Schicht Papier als Halbisolator eingeschaltet ist. Harte Entladungen treten nicht mehr auf. Die farbliche und drucktechnische Gestaltungsmöglichkeit sind wie bei einer normalen Wellpappe gegeben. Zweckmäßig ist jede Außenseite der Wellpappe mit dem ableitenden Lack behandelt. Wenn nur eine Schicht vorgesehen und nur eine Außenseite mit dem ableitenden Lack behandelt ist, dann sollte dies im Faltbehälter zweckmäßigerweise die dem Innenraum abgewandte Außenseite sein, und zwar aufgrund der Gefahr von Einstichen von innen her.

Eine gute Abschirmwirkung wird mit einer Beschichtung erreicht, die netz- oder gitterwerkartige starkverdichtete Schichtteile und dazwischenliegende schwachverdichtete flächige Schichtteile aufweist. Die starkverdichteten Schichtteile definieren einen ausgeprägten Faraday'schen Käfig, in dem die schwachverdichteten Schichtteile assistieren. Bei dieser Ausbildung der Schicht ist der Einsatz von Kohlenstoff und/oder Graphit reduziert, was der Entsorgung und dem Recycling zugute kommt. Zweckmäßigerweise werden die starkverdichteten Schichtteile durch mehrere aufeinanderfolgende Druckgänge gebildet. Die schwachverdichteten Schichtteile werden zuvor oder nachher vollflächig aufgedruckt. Die schwachverdichteten Schichtteile ermöglichen die haltbare Verklebung der Lagen, weil sie vom Klebstoff leichter durchdrungen werden. Bei einer Schicht mit netzwerk- oder gitterwerkartigen, verbundenen hohen Schichtteilen und dazwischenliegenden flächigen und gegenüber den hohen Schichtteilen niedrigeren Schichtteilen wird ebenfalls eine gute Abschirmwirkung bei reduziertem Einsatz von Kohlenstoff und/oder Graphit erreicht. In den niedrigen Schichtteilen kann der die Lagen verklebende Klebstoff durchdringen, so daß sich eine haltbare Verklebung der Lagen ergibt. Die hohen Schichtteile werden zweckmäßigerweise durch mehrere aufeinanderfolgende Druckgänge aufgebracht und verdichtet. Die niedrigen Schichtteile werden durch einen oder zwei vollflächige Druckgänge zuvor oder nachträglich aufgebracht.

Die Verklebung der Lagen ist bei einer Schicht besonders einfach und haltbar, die miteinander verbundene Schichtteile mit dazwischenliegenden und bis zur Oberfläche der Lagen durchgehenden Verklebungsunterbrechungen aufweist. Der durch die miteinander verbundenen Schichtteile gebildete Faraday'sche Käfig sorgt für eine gute Abschirmung. Zweckmäßigerweise sind die Schichtteile durch mehrere Druckgänge stark verdichtet; es ist aber auch denkbar, die Schichtteile aufzustreichen oder aufzusprühen.

Bei einem sehr gestaltfesten, knickfesten und durchstechfesten Wellpappeaufbau mit zwei oder mehr gewellten Kernlagen und dazwischen einkaschierten Decklagen kann innen eine abschirmende Schicht und außen wenigstens an einer Außenseite der ableitende Lack vorgesehen sein. Es ist aber auch denkbar, mehrere abschirmende Schichten im Wellpappeaufbau unterzubringen und beide Außenseiten mit dem ableitenden Lack zu behandeln.

Sofern die abschirmende Schicht und der ableitende Lack entsprechend den Spezifikationen der Norm CECC 00 015/I, 1991 ausgebildet sind, wird ein hoher Schutz für gegen elektrostatische Ladungen oder von diesen ausgehende Felder empfindliche elektronische Bauelemente oder Gegenstände garantiert. In der extrem niederohmigen Schicht reicht ein geringer Anteil von Kohlenstoff und/oder Graphit aus. Dies verbessert die Recyclingfähigkeit der Wellpappe , der Faltbehälter oder der Bogenware. Das Ableiten schädlicher Felder oder Spannungen und die Vermeidung harter Entladungen werden durch den Lack gewährleistet.

Ist der ableitende Lack mit einem sublimierbaren Korrosionsinhibitor kombiniert, dann wird zusätzlich zur abschirmenden Wirkung und der Vermeidung harter Entladungen ein Korrosionsschutz der in einem Faltbehälter oder in Bogenware verpackten empfindlichen Gegenstände erreicht. Solche Korrosionsinhibitoren, die vorzugsweise polare organische Salze mit kathodischer und anodischer Schutzwirkung sind, verdampfen allmählich und sättigen den Luftraum um die zu schützen-den Gegenstände und lagern sich an blanken Metalloberflächen ab. Sie passivieren die zu einer Korrosion führenden elektrochemischen Prozesse und verbrauchen sich dabei allmählich. In der Kombination mit dem ableitenden Lack ist der Korrosionsinhibitor wie in einem Depot untergebracht, aus dem er allmählich und damit über lange Zeit wirkt. Gegebenenfalls wirkt der Lack und auch die Wellpappestruktur als Barriere zur dosierenden Abgabe des Korrosionsinhibitors, so daß sich über lange Zeit ein gleichbleibender intensiver Korrosionsschutzeffekt ergibt.

Ist der ableitende Lack transparent und/oder eingefärbt und/oder bedruckt, dann kann die Wellpappe oder der Falbehälter oder die Bogenware frei gestaltet oder, z. B. durch eine leichte Einfärbung, von vornherein als Spezialmaterial gekennzeichnet sein. Die abschirmende Schicht beeinträchtigt die freie Gestaltung nicht. Es ist auch denkbar, ein Druckbild unter dem Lack aufzubringen, und damit auf die spezielle Verwendbarkeit des Faltbehälters oder der Bogenware hinzuweisen, bzw. auf den Inhalt.

Anhand der Zeichnungen werden Ausbildungsformen des Erfindungsgegenstandes erläutert. Es zeigt:
- Fig. 1, 2, 3 und 6: Querschnitte durch verschiedene Ausführungsformen von Wellpappe,
- Fig. 4: eine perspektive Ansicht eines Faltbehälters aus Wellpappe,
- Fig. 5: eine Perspektivansicht von Wellpappe-Bogenware zum Verpacken von Gegenständen oder zur Herstellung von Zuschnitten für Faltbehälter,
- Fig. 7: einen Querschnitt einer weiteren Ausführungsform von Wellpappe,
- Fig. 8: einen Schnitt in der Wellpappe von Fig. 7,
- Fig. 9: a bis e Detailvariationen zu Fig. 8,
- Fig. 10: einen Schnitt durch eine offene Wellpappe ,
- Fig. 11: einen Querschnitt und eine Detaildraufsicht einer weiteren Ausführungsform,
- Fig. 12: einen Querschnitt und eine Detaildraufsicht einer weiteren Ausführungsform einer Wellpappe.

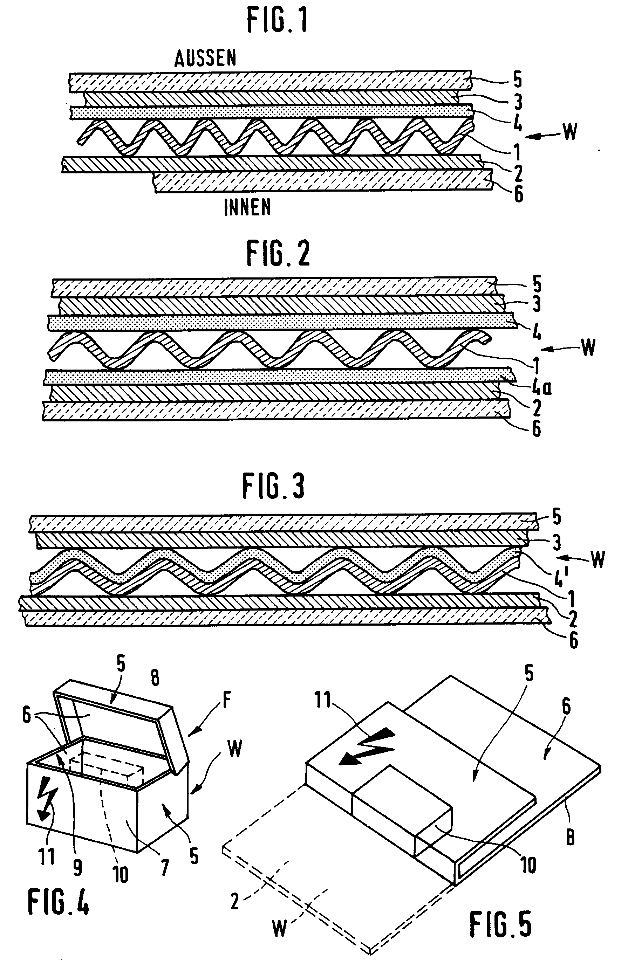

Eine Wellpappe W (Fig. 1 ) weist eine gewellte Kernlage 1 auf, die an ihren beiden Seiten mit je einer Decklage 2, 3 belegt ist. Auf der der Kernlage zugewandten Unterseite der Decklage 3 ist eine niederohmige, elektrostatisch abschirmende Schicht 4 aufgebracht. Ferner ist auf der der Kernlage 1 abgewandten Außenseite zumindest einer, zweckmäßigerweise beider Decklagen 2, 3, ein ableitender Lack 5, 6 aufgebracht. Die Schicht 4 enthält Kohlenstoffpartikel und/oder Graphit, wobei das verwendete Kohlenstoff-Material allein oder in einer Mischung mit einem Bindemittel aufgebracht ist. Der Flächenwiderstand der Schicht 4 ist < 10⁴ Ohm/Fläche, vorzugsweise < 10¹ Ohm/Fläche. Der Flächenwiderstand der mit dem ableitenden Lack 5, 6 behandelten Außenseite liegt zwischen 10⁵ und 10¹² Ohm/Fläche. Gemäß Norm CECC 00 0015/I, 1991 ist die Schicht 4 somit elektrostatisch abschirmend, während der Lack 5, 6 elektrostatisch ableitend ist.

In dieser und in den nachfolgenden Figuren sind die abschirmende Schicht und der ableitende Lack übertrieben dick und als eigenständige Beschichtungen dargestellt. Tatsächlich sind sie jedoch dünner. Der Lack ist in die jeweilige Außenseite eingedrungen vorzustellen.

Ferner sind in den Figuren 1 bis 3 Standard-Wellpappen gezeigt. Das erfindungsgemäße Prinzip könnte jedoch auch bei einer sogenannten offenen Wellpappe mit nur einer gewellten Kernlage 1 und einer ebenen Decklage 2 oder 3 angewendet sein, wobei dann die Schicht 4 zwischen der Kernlage 1 und der jeweiligen Decklage und der Lack 5, 6 an einer freien Außenseite der Wellpappe, d. h. an der Decklage und/oder der Kernlage aufgebracht ist.

In der Wellpappe W gemäß Fig. 2 ist an beiden Seiten der Kernlage 1 eine niederohmige Schicht 4, 4a an der Decklage 2, 3 angebracht. Die Außenseiten der Decklagen 2, 3, zumindest die Außenseite einer Decklage, sind vollflächig mit dem ableitenden Lack 5, 6 behandelt. In Fig. 3 ist die Schicht 4' auf die der Decklage 3 zugewandte Seite der Kernlage 1 aufgebracht. Beide Decklagen 2, 3 sind mit ableitendem Lack 5, 6 behandelt. Es könnten auch beide Seiten der Kernlage 1 eine Schicht 4' tragen bzw. es könnte der Lack nur auf einer Außenseite der Wellpappe W aufgebracht sein.

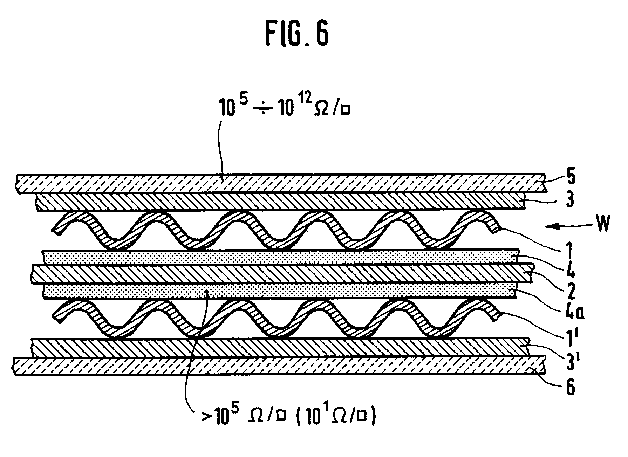

Die Wellpappe W gemäß Fig. 6 ist für höhere mechanische Belastungen oder höhere Steifigkeit konzipiert. Zwei oder mehrere gewellte Kernlagen 1, 1' sind jeweils durch eine Decklage 2 getrennt und außen durch Decklagen 3, 3' abgedeckt. An beiden Seiten der mittleren Decklage 2 sind niederohmige Schichten 4, 4a aufgebracht. Die freien Außenseiten der Wellpappe oder zumindest die freie Außenseite zumindest einer Decklage 3, 3' weisen ableitenden Lack 5, 6 auf. Bei allen vorgenannten Ausführungsformen können die nicht mit ableitendem Lack behandelten Außenseiten der Wellpappe unbehandelt belassen sein. Es ist aber auch denkbar, sie mit einer anderen schützenden Lackschicht oder einer Imprägnierung zu versehen.

In der Wellpappe gemäß Fig. 6 könnte auch nur eine einzige niederohmige Schicht 4, oder 4a vorgesehen sein. Ferner könnten wie in Fig. 3 eine oder beide Kernlagen 1, 1' als Träger der niederohmigen Schicht (einseitig oder beidseitig) dienen. In Fig. 6 könnte eine niederohmige Schicht auch an einer der Innenseiten einer Decklage 3 oder 3' angebracht sein. Denkbar ist es schließlich, beide äußeren Decklagen 3, 3' innenseitig mit einer niederohmigen Schicht 4, 4a zu versehen. Gegebenenfalls ist die Wellpappe an einer oder an beiden Außenseiten mit einem Aufdruck (11 in Fig. 4 und 5) versehen. Der Aufdruck 11 kann auf oder unter dem Lack vorgesehen sein. Der ableitende Lack ist zweckmäßigerweise transparent oder leicht eingefärbt oder klar.

Ein Faltbehälter F gemäß Fig. 4 ist eine quaderförmige Schachtel mit einem Unterteil 7 und einem Deckel 8, der zweckmäßigerweise am Unterteil 7 angeformt ist und über die Öffnung des Unterteils 7 stülpbar ist. Der mit 9 bezeichnete Innenraum dient zum geschützten Aufnehmen wenigstens eines elektrostatisch gefährdeten Gegenstandes 10, d. h. einer elektronischen Komponente oder eines explosiven oder leicht entzündlichen chemischen Stoffes. Die dem Innenraum zu-gewandten und die äußeren Oberflächen sind mit dem ableitenden Lack 5, 6 behandelt. Mit 11 ist das Druckbild angedeutet. Ist nur eine Außenseite der Wellpappe im Faltbehälter F mit dem ableitenden Lack behandelt, so sollte der Lack an der Außenseite des Faltbehälters F liegen. Ist nur eine Schicht für den Wellpappeaufbau vorgesehen, so sollte diese wegen der Gefahr von Einstichen von innen an der dem Innenraum 9 abgewandten Seite der Kernlage 1 liegen.

In Fig. 5 ist Bogenware B aus der Wellpappe W gemäß einer der Figuren 1 bis 6 ersichtlich, die entweder zum Verpacken eines oder mehrerer Gegenstände 10 oder zum Herstellen von Zuschnitten für Faltbehälter F dienen kann. Der Gegenstand 10 wird in die Bogenware B eingeschlagen, wobei beide Oberflächen der Bogenware B mit dem ableitenden Lack 5, 6 durchgehend behandelt sind. Gegebenenfalls ist auch ein Druckbild 11 aufgebracht bzw. die Bogenware B an einer oder beiden Seiten bedruckt.

Die jeweils im Wellpappeaufbau enthaltene elektrostatisch abschirmende Schicht 4, 4a, 4' ist in den Fig. 1, 2, 3 und 6 mit durchgehend gleicher Schichtstärke dargestellt. Sie ist jeweils zweckmäßigerweise durch Aufdrucken, Aufsprühen, Aufstreichen oder dergleichen aufgebracht. Beim Aufdrucken werden - um eine möglichst hohe Dichte zu erreichen - zweckmäßigerweise mehrere aufeinanderfolgende Druckgänge angewandt. Die jeweilige Schicht kann aber - wie nachstehend erläutert - entweder durchgängig aber in sich nicht gleichförmig oder auch mit flächigen Unterbrechungen ausgebildet sein, und zwar um Abschirmmaterial einzusparen bzw. Probleme beim Verkleben der Lagen und mit der Haltbarkeit der Klebeverbindung zu vermeiden.

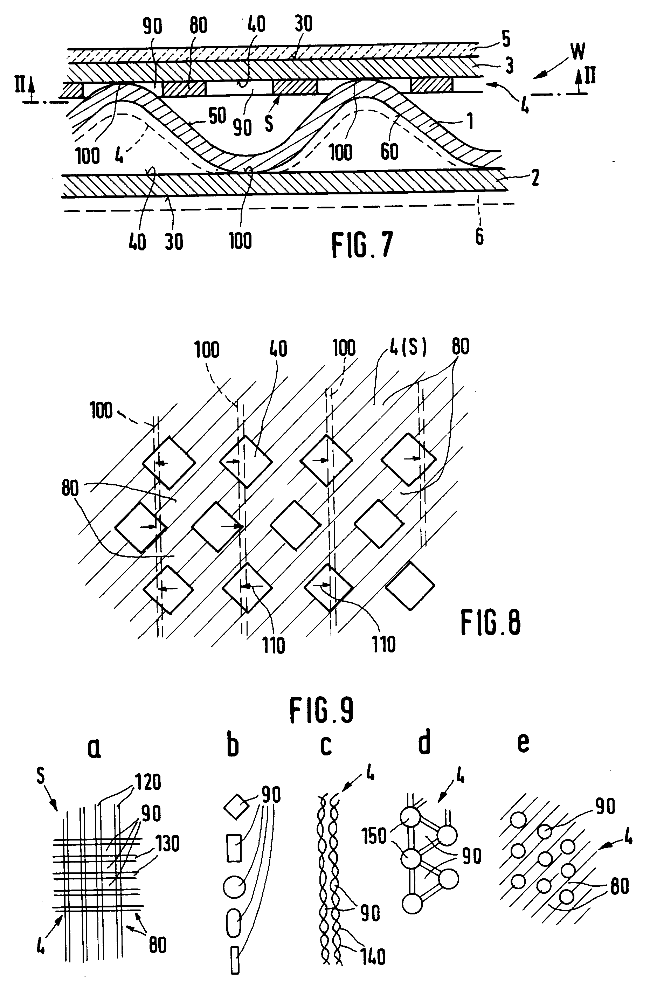

Die Wellpappe W gemäß Fig. 7 enthält in ihrem Aufbau eine ebene Decklage 3, die zumindest im Bereich von Wellenkämmen 100 mit der gewellten Kernlage 1 verklebt ist. Auf die andere Seite der gewellten Kernlage 1 ist die ebene Decklage 2 aufgeklebt. Gegebenenfalls bestehen die Decklagen 2, 3 und die Kernlage 1 aus mehreren miteinander verbundenen Einzellagen. Die Oberflächen der Decklagen 2, 3 und der Kernlage 1 sind mit 30, 40, 50, 60 bezeichnet. In der gezeigten Ausführungsform ist die abschirmende Schicht 4 (S) auf die innenliegende Oberfläche 40 der Decklage 30 aufgebracht. Die Schicht 4 könnte auch aus einem Trägermaterial (Kunststoffolie, Papier oder Textilie) bestehen, das mit Kohlenstoff und/oder Graphit ausgerüstet ist und zwischen die Lagen eingesetzt wird.

In Fig. 7 ist die Schicht 4 aus zusammenhängenden Schichtteilen 80 und von diesen begrenzten, voneinander getrennten und jeweils bis zur Oberfläche 40 durchgehenden Unterbrechungen 90 aufgebracht. Die Unterbrechungen 90 sind (Fig. 8) flächig und musterartig relativ gleichmäßig verteilt und ermöglichen ein festeres und haltbareres Verkleben der Lagen, weil der Klebstoff im Bereich der Unterbrechungen 90 nicht durch das Material der Schicht 4 beeinträchtigt wird. Der Gesamtflächenanteil der Unterbrechungen 90 ist zweckmäßigerweise kleiner als der Gesamtflächenanteil der Schichtteile 80. Die Unterbrechungen 90 sind so ausgebildet und angeordnet, daß die Wellenkämme 100 der Kernlage 1 zumindest bereichsweise in den Unterbrechungen 90 entweder die Oberfläche 40 direkt oder fast berühren. Der Kleber, der üblicherweise zum Kaschieren oder Verkleben der Lagen von Wellpappe benutzt wird, stellt hier eine feste Verbindung her. Die Verbindungsbereiche sind in Fig. 8 mit Pfeilen jeweils bei 11 angedeutet.

Das Muster der Unterbrechungen 90 ist zweckmäßigerweise schräg oder senkrecht zur Orientierung der Wellenkämme 100 ausgerichtet, damit sich viele und regelmäßig verteilte Überschneidungspunkte zwischen den Wellenkämmen 100 und den Unterbrechungen 90 ergeben. Die Schichtteile 80 sind miteinander verbunden, so daß sich insgesamt ein Faraday'scher Käfig ergibt, wenn ein zu schützender Gegenstand in einen aus der Wellpappe gebildeten Faltbehälter F eingelegt oder in Bogenware B aus der Wellpappe W eingeschlagen wird.

Die Unterbrechungen 90 können jede beliebige Form haben. Zweckmäßigerweise sind sie rund, viereckig oder rautenförmig wie in den Fig. 8 und 9 angedeutet. Die miteinander verbundenen Schichtteile 80 sind zweckmäßigerweise aufgedruckt, und zwar in mehreren Druckdurchgängen, um eine hohe Dichte zu erzeugen.

In Fig. 7 ist strichliert angedeutet, daß die Schicht 4 alternativ oder zusätzlich auch auf der Oberfläche 60 der Kernlage 1 vorgesehen sein kann und auch dann wieder miteinander verbundene Schichtteile und dazwischenliegende, voneinander getrennte Unterbrechungen aufweist. Es könnten auch beide Oberflächen 50, 60 mit der Schicht 4 versehen sein. Zusätzlich oder alternativ könnte auch auf der anderen Oberfläche 40 der Decklage 2 eine Schicht 4 angeordnet sein. Auf der Oberfläche 30 der Decklage 3 ist der ableitende Lack 5 aufgebracht. Auch auf der Oberfläche 30 der Decklage 2 könnte der ableitende Lack 6 (strichliert angedeutet) aufgebracht sein.

Gemäß Fig. 9a besteht die Schicht aus netz- oder gitterwerkartig aufgetragenen Linien, Bahnen, Balken oder Streifen 120, 130, die einander unter einem rechten oder auch unter jedem anderen gewünschten Winkel überkreuzen und miteinander verbundene Schichtteile 80 bilden. Die dazwischenliegenden Unterbrechungen 90 können bis zur Oberfläche durchgehen, auf die die Schicht aufgebracht ist. Ist die Schicht 4 - wie erwähnt - von einem entsprechend ausgerüsteten Trägermaterial gebildet, dann besitzt dieses ein Unterbrechungsmuster z. B. der vorerwähnten Art.

In Fig. 9b sind unterschiedliche geometrische Formen für die Unterbrechungen 90 angedeutet. In Fig. 3c besteht die Schicht 4 aus einander überkreuzenden Schlangenlinien 140, die die Unterbrechungen 90 begrenzen. In Fig. 9d sind die Schichtteile in der Schicht 4 annähernd kreisrunde Flächen 150, die untereinander durch Querverbindungen 160 verbunden sind und die Unterbrechungen 90 begrenzen. Zweckmäßig werden die Schichtteile 80 aber wie in Fig. 9e gezeigt aufgetragen, so daß getrennte annähernd kreisrunde Unterbrechungen 90 entstehen.

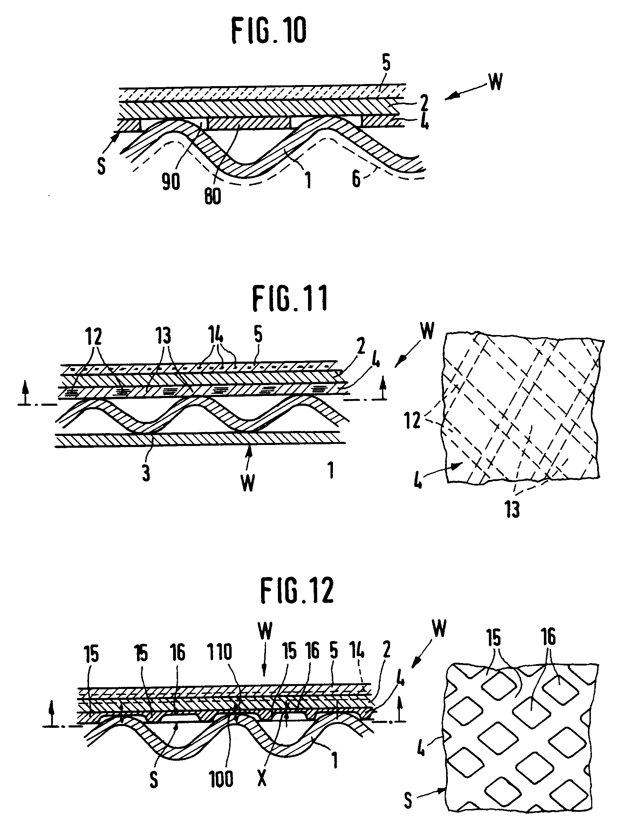

In Fig. 10 ist eine offene Wellpappe W mit nur einer gewellten Kernlage 1 und einer ebenen Decklage 2 angedeutet, wobei die Schicht 4 zwischen der Decklage 2 und der Kernlage 1 angeordnet ist. Die Schicht 4 weist wiederum die flächigen Unterbrechungen 90 zwischen den miteinander verbundenen Schichtteilen 80 auf. Auf der Decklage 2 ist der ableitende Lack 5 angebracht. Gegebenenfalls ist auch die gegenüberliegende, freiliegende Oberfläche der Kernlage 1 mit dem ableitenden Lack 6 (strichliert angedeutet) behandelt.

Bei der Ausführungsform gemäß Fig. 11 ist im Aufbau der Wellpappe W zwischen der Kernlage 1 und der ebenen Decklage 2 die Schicht 4 zur elektrostatischen Abschirmung vorgesehen und derart ausgebildet, daß sie zwar mit annähernd gleicher Schichtstärke und durchgehend verläuft, jedoch in sich miteinander verbundene hochverdichtete Schichtteile 12 mit dazwischenliegenden, flächigen weniger stark verdichteten Schichtteilen 13 aufweist. Dieser Aufbau der Schicht 4 wird z. B. dadurch erreicht, daß in mehreren Druckgängen die hochverdichteten Schichtteile 12 gebildet werden, und daß zuvor oder danach in einem oder zwei Druckgängen mit weniger Auflagedruck die zwischen den Schichtteilen 12 freibleibenden Unterbrechungen mit den Schichtteilen 13 ausgefüllt werden. Dies hat gegebenenfalls den Vorteil, daß in den weniger hoch verdichteten Schichtteilen 13 das Klebemittel die Schicht 4 durchdringt und die Kernlage 1 mit der Decklage 2 fest verbindet. Eine derart strukturierte Schicht 4 könnte auch zwischen der Kernlage 1 und der anderen Decklage 3 vorgesehen sein, oder auf einer oder beiden Oberflächen der Kernlage 1. Zumindest auf der Decklage 2 ist außen der ableitende Lack 5 aufgebracht, der vorzugsweise mit einem sublimierbaren Korrosionsinhibitor 14 kombiniert ist. Der Korrosionsinhibitor enthält polare, organische Salze, von denen freiwerdende Dämpfe an Metalloberflächen zu monomolekularen Filmen kondensieren, die die zur Korrosion führenden elektrochemischen Prozesse passivieren. Der Korrosionsinhibitor 14 ist entweder auf die Decklage 2 aufgetragen, ehe der ableitende Lack 5 aufgebracht wird, oder dem ableitenden Lack 5 beigemischt. Denkbar ist es auch, den Korrosionsinhibitor auf den ableitenden Lack 5 aufzubringen. Ist auf beiden Decklagen 2, 3 ein ableitender Lack 5, 6 angebracht, dann ist der Korrosionsinhibitor 14 zweckmäßigerweise an beiden Seiten der Wellpappe W vorgesehen. Der Korrosionsinhibitor 14 nutzt den Wellpappeaufbau als Depot, aus dem er langsam verdampft und in einen Faltbehälter eingelegte Gegenstände oder in Bogenware eingepackte Gegenstände über lange Zeit gegen Korrosion schützt.

Der Korrosionsinhibitor 14 kann auch bei den vorhergehenden Ausführungsformen der Wellpappe, des Faltbehälters oder der Bogenware mit dem ableitenden Lack 5, 6 kombiniert sein.

Eine besonders zweckmäßige Ausführungsform der Wellpappe W geht schließlich aus Fig. 12 hervor. Die abschirmende Schicht 4 zwischen der Kernlage 1 und der Decklage 2 besteht aus miteinander verbundenen hohen Schichtteilen 15 und dazwischenliegenden, flächigen Schichtteilen 16, die deutlich niedriger als die hohen Schichtteile 15 sind. Im Bereich der Schichtteile 16 kann der Kleber durchdringen und haltbare Verbindungsstellen 110 bilden. Aus dem Zusammenspiel der hohen Schichtteile 15 und der niedrigen flächigen Schichtteile 16 ergibt sich insgesamt eine sehr gute Abschirmwirkung. Die hohen Schichtteile 15 sind zweckmäßigerweise durch mehrfaches Aufeinanderdrucken gebildet, wobei zuvor oder danach in einem oder höchstens zwei Druckgängen durch Überdrucken oder Vordrucken die niedrigen Schichtteile 16 gebildet werden. Die Dicke x der niedrigen Schichtteile ist zweckmäßigerweise so gewählt, daß diese vom Kleber durchdringbar sind, damit die Wellenkämme 100 der Kernlage 1 festhaltend mit der Decklage 2 verklebbar sind. Auf die Decklage 2 ist der ableitende Lack 5 aufgebracht, der mit dem Korrosionsinhibitor 14 kombiniert ist, z. B. indem dieser zuvor auf die Decklage 2 aufgestrichen, aufgesprüht oder aufgedruckt wird. Ist eine zweite Decklage (Fig. 12 nicht gezeigt), vorgesehen, dann könnte eine weitere Schicht 4 zwischen der Kernlage und dieser weiteren Decklage vorgesehen sein. Ferner könnte dann die zweite Decklage mit dem ableitenden Lack 6 behandelt und mit dem Korrosionsinhibitor 14 kombiniert sein. Die aus hohen Schichtteilen 15 und niedrigen Schichtteilen 16 bestehende Schicht 4 könnte auch auf einer oder auf beiden Oberflächen der Kernlage 1 angebracht sein.

Die abschirmende Schicht 4 wird beispielsweise in einer Dosierung von 5 g/m² im nassen Zustand, entsprechend einem Flächengewicht von 2,5 g/m² in trockenem Zustand aufgebracht. Bei einer Schicht 4 mit hohen, miteinander verbundenen Schichtteilen und dazwischenliegenden, niedrigeren, flächigen Schichtteilen werden in den hohen Schichtteilen drei bis fünf Schichten mit dazwischenliegenden Unterbrechungen aufgedruckt, während die niedrigeren Schichtteile durch vollflächiges vorhergehendes oder nachfolgendes Aufbringen von einer oder zwei Schichten gebildet werden. Wird der Korrosionsinhibitor 14 dem ableitenden Lack 5, 6 zugemischt, dann erfolgt dies mit einer Dosis von 5 bis 10 Gewichtsprozenten. Der ableitende Lack 5, 6 wird - mit oder ohne Korrosionsinhibitor - in einer Dosis von z. B. 25 - 30 g/m² (Naß) Gewicht aufgebracht.

## Patentansprüche

1. Wellpappe (W) aus Pappe- oder Papiermaterial für Faltbehälter (F) oder für Bogenware (B) zum Schutz elektrostatisch gefährdeter Gegenstände (10) gegen elektrostatische Entladungen und elektrische Felder, bestehend aus wenigstens einer gewellten Kernlage (1, 1'), auf deren mindestens einer Seite eine ebene Decklage (2) aufkaschiert ist, und mit wenigstens einer im Wellpappeaufbau zwischen der Kernlage (1, 1'), und der Decklage (2, 3, 3') und an einer dieser Lagen angeordneten, Ruß oder/und Graphit enthaltenden abschirmenden Schicht (4, 4a, 4', S), **dadurch gekennzeichnet**, daß die an wenigstens einer Außenseite der Wellpappe (W) liegende Decklage (2, 3, 3') an ihrer der Kernlage (1, 1') und der abschirmenden Schicht (4, 4a, 4', S) abgewandten Seite (30) durchgehend mit einem gemäß Norm CE CC 00 015/l,1991, ableitenden Lack (5, 6) versehen ist, und daß zwischen dem ableitenden Lack (5, 6) und der abschirmenden Schicht (4, 4a, 4', S) Papier als Halbisolator vorgesehen ist.

2. Wellpappe nach Anspruch 1, **dadurch gekennzeichnet**, daß die Schicht (S, 4, 4a, 4') durchgehend mit annähernd gleicher Schichtstärke ausgebildet ist.

3. Wellpappe nach Anspruch 2, **dadurch gekennzeichnet**, daß die durchgehende Schicht (4) netz- oder gitterwerkartig, miteinander verbundene, stark verdichtete Schichtteile (12) und dazwischenliegende flächige und schwach verdichtete Schichtteile (13) aufweist, und daß die stark verdichteten Schichtteile (12) durch mehrfache Druckgänge des Netz- oder Gitterwerks und die schwach verdichteten Schichtteile (13) durch einen oder zwei vollflächige Druckgänge gebildet sind.

4. Wellpappe nach Anspruch 1, **dadurch gekennzeichnet**, daß die durchgehende Schicht (4) aus netztwerk- oder gitterwerkartigen, miteinander verbundenen, hohen Schichtteilen (15) und aus dazwischenliegenden flächigen und gegenüber den hohen Schichtteilen (15) niedrigeren Schichtteilen (16) besteht.

5. Wellpappe nach den Ansprüchen 3 und 4, **dadurch gekennzeichnet**, daß die niedrigen Schichtteile (16) bzw. die schwach verdichteten Schichtteile (13) mit einer Stärke bzw. einer Dichte ausgebildet sind, die das Durchdringen eines die Lagen (1, 1', 2, 3, 3') verbindenden Klebemittels (110) zuläßt.

6. Wellpappe nach den Ansprüchen 4 und 5, **dadurch gekennzeichnet**, daß die Schicht (4) in den hohen Schichtteilen (15) aus mehreren, stoffschlüssig aufeinanderliegenden Drucklagen und in den niedrigen Schichtteilen (16) aus nur einer oder zwei Drucklagen besteht.

7. Wellpappe nach Anspruch 1, **dadurch gekennzeichnet**, daß die Schicht (4), vorzugsweise in Form eines Netz- oder Gitterwerks, miteinander verbundene Schichtteile (80, 120, 130, 140, 150, 160) mit dazwischenliegenden, bis zur Oberseite (40, 50, 60) der Lage (1, 2, 3, 3') durchgehenden, flächigen Verklebungs-Unterbrechungen (90) aufweist.

8. Wellpappe nach den Ansprüchen 1 bis 7, **dadurch gekennzeichne**t, daß in einer Wellpappe mit zwei oder mehr gewellten Kernlagen (1, 1') und jeweils einer zwischen zwei Kernlagen (1, 1') einkaschierten ebenen Decklage (2) diese Decklage (2) an einer Seite, vorzugsweise an beiden Seiten eine niederohmige Schicht (4, 4a) aufweist, und daß die den Kernlagen (1, 1') abgewandte Seite wenigstens einer außenliegenden Decklage (3, 3') mit ableitendem Lack (5, 6) versehen ist.

9. Wellpappe nach wenigstens einem der Ansprüche 1 bis 8, **dadurch gekennzeichnet**, daß die elektrostatisch abschirmende Schicht (4, 4a) einen Flächenwiderstand < 10⁴ Ohm/Fläche, vorzugsweise < 10² Ohm/Fläche, vorzugsweise < 10¹ Ohm/Fläche aufweist, und daß die mit dem ableitenden Lack (5, 6) versehene Seite der Lage einen Flächenwiderstand zwischen 10⁵ bis ca. 10¹² Ohm/Fläche aufweist, gemäß Norm CECC 00 015/l, 1991.

10. Wellpappe nach wenigstens einem der Ansprüche 1 bis 9, **dadurch gekennzeichnet**, daß der ableitende Lack (5, 6) mit einem sublimierbaren Korrosionsinhibitor (14) kombiniert ist, der unter/oder auf den Lack aufgebracht oder im Lack enthalten ist, und daß der sublimierbare Korrosionsinhibitor (14) ein VCI Additiv (Volatile Corrosion Inhibitor) ist, vorzugsweise ein polares, organisches Salz mit kathodischen und anodischen Schutzwirkungen.

11. Wellpappe nach den Ansprüchen 1 bis 10, **dadurch gekennzeichnet**, daß der ableitende Lack (5, 6) transparent und/oder eingefärbt und/oder bedruckt ist.

12. Wellpappe nach den Ansprüchen 1 bis 11, **dadurch gekennzeichnet**, daß zumindest eine Decklage (2, 3, 3') unter dem ableitenden Lack (5, 6) bedruckt ist (Druckbild 11).

13. Faltbehälter aus Wellpappe für zum Schutz elektrostatisch gefährdeter Gegenstände gegen elektrostatische Ladungen und elektrische Felder, mit wenigstens einer gewellten Kernlage (1, 1') und wenigstens einer auf die Kernlage aufkaschierten Decklage (2, 3, 3'), und mit wenigstens einer im Wellpappeaufbau zwischen der Kernlage (1, 1') und der Abdecklage (2, 3, 3') an wenigstens einer dieser Lagen angeordneten, Ruß- oder Graphit enthaltenden niederohmigen, elektrostatisch abschirmenden Schicht (4, 4a, 4') **dadurch gekennzeichnet**, daß die der Außenseite der Wellpapp (W) zugwandte Decklage (2, 3, 3') an ihrer der Kernlage (1, 1') und der Schicht (4, 4a, 4') abgewandten Seite vollflächig mit einem gemäß Norm CECC 00 015/l, 1991, ableitenden Lack (5, 6) behandelt ist, und daß bei nur einer mit dem Lack behandelten Decklage und einer abschirmenden Schicht der Lack (5) und die Schicht an der dem Innenraum (9) des Faltbehälters (F) abgewandten Seite der Kernlage (1, 1') liegen.

14. Bogenware aus Wellpappe zum Schutz elektrostatisch gefährdeter Gegenstände (10) gegen elektrostatische Ladungen und elektrische Felder, mit wenigstens einre gewellten Kernlage (1, 1') und wenigstens einer auf die Kernlage aufkaschierten ebenen Decklage (2, 3, 3'), und mit einer im Wellpappeaufbau zwischen der Kernlage (1, 1') und der Abdecklage (2, 3, 3') und an wenigstens einer dieser Lagen angeordneten Ruß oder/und Graphit enthaltenden niederohmigen, elektrostatisch abschirmenden Schicht (4, 4a, 4'), **dadurch gekennzeichnet**, daß zumindest eine der Außenseite der Wellpappe-Bogenware (B) zugewandte Decklage (2, 3, 3') an ihrer Kernlage (1, 1') und der Schicht abgewandten Seite vollflächig mit einem gemäß Norm CECC 00 015/l, 1991, ableitenden Lack (5, 6) versehen ist.

## Claims

1. A corrugated board (W) consisting of paperboard or paper material and used for folding cases (F) or for sheet materials (B) for protecting electrostatically endangered articles (10) against electrostatic discharges and electric fields, comprising at least one corrugated core layer (1, 1') having a flat cover layer (2) bonded to at least one side thereof, and further comprising at least one shielding layer (4, 4a, 4', S), which contains carbon black or/and graphite and which is arranged in the corrugated board structure between the core layer (1, 1') and the cover layer (2, 3, 3') and on one of these layers, **characterized in** that the cover layer (2, 3, 3') positioned on at least one outer side of the corrugated board (W) is continuously provided on its side (30) facing away from the core layer (1, 1') and from the shielding layer (4, 4a, 4', S) with a lacquer (5, 6) conducting in accordance with standard CE CC 00 015/I, 1991, and that paper is provided as a semi-insulator between the conducting lacquer (5, 6) and the shielding layer (4, 4a, 4', S).

2. A corrugated board according to claim 1,
**characterized in** that the layer (S, 4, 4a, 4') is formed as a continuous layer having an approximately uniform layer thickness.

3. A corrugated board according to claim 2,
**characterized in** that the continuous layer (4) comprises network-like or latticework-like, interconnected, highly compacted layer components (12) as well as intermediate weakly compacted layer components (13) which occupy a certain area, and that the highly compacted layer components (12) are formed by repeated printing processes of the network or latticework, whereas the weakly compacted layer components (13) are formed by one or two full-area printing processes.

4. A corrugated board according to claim 1,
**characterized in** that the continuous layer (4) consists of network-like or latticework-like, interconnected, high layer components (15) as well as of intermediate layer components (16) which occupy a certain area and which are lower in comparison with said high layer components (15).

5. A corrugated board according to claims 3 and 4,
**characterized in** that the low layer components (16) and the weakly compacted layer components (13) have a thickness and a density of such a nature that an adhesive agent (110) will be able to penetrate said layer components and interconnect the layers (1, 1', 2, 3, 3').

6. A corrugated board according to claims 4 and 5,
**characterized in** that, in the high layer components (15), the layer (4) consists of a plurality of printed layers, which are positioned one on top of the other and which are bonded to one another, whereas in the the low layer components (16), it consists of only one or two printed layers.

7. A corrugated board according to claim 1,
**characterized in** that the layer (4) comprises layer components (80, 120, 130, 140, 150, 160), which are preferably interconnected in the form of a network or latticework, with intermediate interruptions (90) occupying a certain area, extending continuously up to the upper surface (40, 50, 60) of the layer (1, 2, 3, 3') and interrupting the areas which are glued together.

8. A corrugated board according to claims 1 to 7,
**characterized in** that in a corrugated board, which comprises two or more corrugated core layers (1, 1') and a flat cover layer (2) arranged between two respective core layers (1, 1') and bonded thereto, said cover layer (2) has on one side thereof, preferably on both sides thereof, a low-ohmic layer (4, 4a), and that at least one outer cover layer (3, 3') is provided with a conducting lacquer (5, 6) on the side facing away from the core layers (1, 1').

9. A corrugated board according to at least one of the preceding claims 1 to 8, **characterized in** that the electrostatically-shielding layer (4, 4a) has a surface resistance < 10⁴ ohm/square, preferably < 10² ohm/square, preferably < 10¹ ohm/square, and that the side of the layer provided with the conducting lacquer (5, 6) has a surface resistance between 10⁵ and approx. 10¹² ohm/square, according to the standard CECC 00 015/I, 1991.

10. A corrugated board according to at least one of the claims 1 to 9, **characterized in** that the conducting lacquer (5, 6) is combined with a sublimable corrosion inhibitor (14), which is applied below/or on top of said lacquer, or which is contained in said lacquer, and that said sublimable corrosion inhibitor (14) is a VCI additive (volatile corrosion inhibitor), preferably a polar, organic salt with cathodic and anodic protective effects.

11. A corrugated board according to claims 1 to 10,
**characterized i**n that the conducting lacquer (5, 6) is transparent and/or coloured and/or provided with an imprint thereon.

12. A corrugated board according to claims 1 to 11,
**characterized in** that at least one of the cover layers (2, 3, 3') bears an imprint below the conducting lacquer (5, 6) (printed image 11).

13. A folding case consisting of a corrugated board used for protecting electrostatically endangered articles against electrostatic charges and electric fields, comprising at least one corrugated core layer (1, 1') and at least one cover layer (2, 3, 3') bonded to said core layer, and further comprising at least one low-ohmic, electrostatically-shielding layer (4, 4a, 4'), which contains carbon black or graphite and which is arranged in the corrugated board structure between the core layer (1, 1') and the cover layer (2, 3, 3') and on at least one of these layers, **characterized in** that the cover layer (2, 3, 3') facing the outer side of the corrugated board (W) is treated with a lacquer (5, 6), which is conducting according to standard CECC 00 015/I, 1991, throughout the whole area thereof on its side facing away from the core layer (1, 1') and the layer (4, 4a, 4'), and that, if only one cover layer treated with lacquer and only one shielding layer are provided, said lacquer (5) and said layer are positioned on the side of the core layer (1, 1') facing away from the interior (9) of the folding case (F).

14. A sheet material consisting of a corrugated board used for protecting electrostatically endangered articles (10) against electrostatic charges and electric fields, comprising at least one corrugated core layer (1, 1') and at least one flat cover layer (2, 3, 3') bonded to said core layer, and further comprising a low-ohmic, electrostatically-shielding layer (4, 4a, 4'), which contains carbon black or/and graphite and which is arranged in the corrugated board structure between the core layer (1, 1') and the cover layer (2, 3, 3') and on at least one of these layers, **characterized in** that at least one cover layer (2, 3, 3') facing the outer side of the corrugated board sheet material (B) is provided with a lacquer (5, 6), which is conducting according to standard CECC 00 15/I, 1991, throughout the whole area thereof on its side facing away from the core layer (1, 1 ') and the layer.

## Revendications

1. Carton ondulé (W), en matériau carton ou papier, pour des récipients pliables (F) ou pour article en feuille (B), destiné à protéger des objets exposés au risque électrostatique (10), contre des décharges électrostatiques et des champs électriques, consistant en au moins une strate ondulée formant noyau (1, 1'), sur au moins un côté de celle-ci on lamine une strate plane de couverture (2), et avec au moins une couche blindée contenant de la suie et/ou du graphite (4, 4a, 4', S) placée dans la construction de carton ondulé, entre la strate formant noyau (1, 1') et la strate de couverture (2, 3, 3') et sur l'une de ces strates, caractérisé en ce que l'on muni la strate de couverture (2, 3, 3') posée sur au moins un côté extérieur du carton ondulé (W), à son côté opposé (30) à la strate formant noyau (1, 1') et à la couche blindée (4, 4a, 4', S), avec un vernis conducteur continu conforme à la norme CE CC 00 015/I, 1991 (5, 6), et en ce que l'on prévoit entre le vernis conducteur (5, 6) et la couche blindée (4, 4a, 4', S), du papier comme semi-isolant.

2. Carton ondulé selon la revendication 1, caractérisé en ce que l'on conforme la couche (S, 4, 4a, 4') continue avec des épaisseurs de couche à peu près analogues.

3. Carton ondulé selon la revendication 2, caractérisé en ce que la couche continue (4) présente, des parties de couche fortement comprimées, liées ensemble, analogues à une grille ou à un réseau (12), et des parties de couches faiblement comprimées, plates, interposées (13), et en ce que l'on forme les parties de couche fortement comprimées (12) par de multiples cycles d'impression du réseau ou du grillage, et les parties de couche faiblement comprimées (13) par une ou deux cycles d'impression pour la totalité de la surface.

4. Carton ondulé selon la revendication 1, caractérisé en ce que l'on constitue la couche continue (4) en parties de couche élevées, liées ensemble, analogues à une grille ou à un réseau (15), et en très basses parties de couche (16) interposées, plates, et en face des parties de couche élevées (15).

5. Carton ondulé selon la revendication 3 ou 4, caractérisé en ce que l'on conforme les très basses parties de couche (16), respectivement les parties de couche faiblement comprimées (13), avec une épaisseur, respectivement une densité, qui permet de diffuser un milieu collant (110) liant les strates (1, 1', 2, 3, 3').

6. Carton ondulé selon la revendication 4 ou 5, caractérisé en ce que l'on constitue la couche (4), dans les parties de couches élevées (15), en plusieurs strates de pressage posées les unes sur les autres à fermeture par matière et, dans les très basses parties de couche (16), en seulement une ou deux strates de pressage.

7. Carton ondulé selon la revendication 1, caractérisé en ce que la couche (4) présente des parties de couche liées ensemble, de préférence sous la forme d'un réseau ou d'un grillage (80, 120, 130, 140, 150, 160), avec des interruptions de collage plates, interposées (90), continues jusqu'au côté supérieur (40, 50, 60) de la strate (1, 2, 3, 3').

8. Carton ondulé selon l'une des revendications 1 à 7, caractérisé en ce que dans un carton ondulé, avec deux ou plusieurs strates formant noyau ondulées (1, 1'), et chaque fois dans une strate de couverture plane (2) laminée entre deux strates formant noyau (1, 1'), cette strate de couverture (2) présente sur un côté, de préférence aux deux côtés, une couche faiblement ohmique (4, 4a), et en ce que l'on muni le côté opposé aux strates formant noyau (1, 1') au moins une strate de couverture posée à l'extérieur (3, 3') avec un vernis conducteur (5, 6).

9. Carton ondulé selon l'une des revendications 1 à 8, caractérisé en ce que la couche blindée anti-électrostatique (4, 4a), présente une résistance de surface < 10⁴ Ohm/surface, de préférence < 10² Ohm/surface, de préférence < 10¹ Ohm/surface, et en ce que le côté muni avec le vernis conducteur (5, 6), de la strate présente une résistance de surface entre 10⁵ et environ 10¹² Ohm/surface, conforme à la norme CE CC 00 015/I, 1991.

10. Carton ondulé selon l'une des revendications 1 à 9, caractérisé en ce que l'on combine le vernis conducteur (5, 6) avec un inhibiteur de corrosion pouvant être sublimé (14) apporté sous/ou sur le vernis ou contenu dans le vernis, et en ce que l'inhibiteur de corrosion pouvant être sublimé (14) est un additif VCI (inhibiteur de corrosion volatil), de préférence un sel organique polaire avec effets protecteurs cathodiques et anodiques.

11. Carton ondulé selon l'une des revendications 1 à 10, caractérisé en ce que le vernis conducteur (5, 6) est transparent et/ou coloré et/ou imprimé.

12. Carton ondulé selon l'une des revendications 1 à 11, caractérisé en ce que l'on imprime moins une strate de couverture (2, 3, 3') sous le vernis conducteur (5, 6) (image d'impression 11).

13. Récipient pliable en carton ondulé destiné à protéger des objets exposés au risque électrostatique, contre des décharges électrostatiques et des champs électriques, avec au moins une strate formant noyau ondulée (1, 1') et au moins une strate de couverture laminée sur la strate formant noyau (2, 3, 3'), et avec au moins une couche blindée anti-électrostatique faiblement ohmique, contenant de la suie ou du graphite (4, 4A, 4'), placée dans la construction de carton ondulé entre la strate formant noyau (1, 1') et la strate de couverture (2, 3, 3') sur au moins l'une de ces strates, caractérisé en ce que l'on traite la strate de couverture (2, 3, 3') tournée vers le côté extérieur du carton ondulé (W) à son côté opposé à la strate formant noyau (1, 1') et à la couche (4, 4A, 4') pour la totalité de la surface, avec un vernis conducteur conforme à la norme CE CC 00 015/I, 1991 (5, 6), et en ce que par seulement une strate de couverture traitée avec le vernis et une couche blindée, on pose le vernis (5) et la couche au côté de la strate formant noyau (1, 1') opposé à l'espace intérieur (9) du récipient pliable (F).

14. Article en feuille en carton ondulé destiné à protéger des objets exposés au risque électrostatique (10) contre des décharges électrostatiques et des champs électriques, avec au moins une strate formant noyau ondulée (1, 1') et au moins une strate de couverture plane laminée sur la strate formant noyau (2, 3, 3') et avec une couche blindée anti-électrostatique faiblement ohmique, contenant de la suie et/ou du graphite, placée dans la construction de carton ondulé entre la strate formant noyau (1, 1') et la strate de couverture (2, 3, 3'), et sur au moins l'une de ces strates, caractérisé en ce que l'on muni au moins une strate de couverture (2, 3, 3'), tournée vers le côté extérieur de l'article en feuille en carton ondulé (B), à sa strate formant noyau (1, 1') et au côté opposé à la couche, à la totalité de la surface, avec un vernis conducteur conforme à la norme CE CC 00 015/I, 1991 (5, 6).
